# EUROPÄISCHE PATENTANMELDUNG

(11) **EP 0 860 614 A2**
(43) Veröffentlichungstag der Anmeldung: **26.08.1998**
(21) Anmeldenummer: 98102586.9
(22) Anmeldetag: 14.02.1998
(51) Int. Cl.: F16B 5/02, F16B 35/04

(54) **Schraube und ihre Verwendung**

(30) Priorität: 19.02.1997 DE 19706389
(71) Anmelder: Arnold Umformtechnik GmbH & Co. KG, 74670 Forchtenberg-Ernsbach (DE)
(72) Erfinder: Barth, Reinhard, 74638 Waldenburg (DE)
(74) Vertreter: Patentanwälte Ruff, Beier, Schöndorf und Mütschele

(57) **Zusammenfassung**

Eine Schraube und ihre Verwendung zum Befestigen eines ersten Bauteils aus einem Material, das möglicherweise zum Fließen neigt, an einem zweiten Bauteil aus einem gegebenenfalls anderen Material wird vorgeschlagen. Die Schraube enthält zusätzlich zu einem für die Befestigung an dem zweiten Bauteil bestimmten Endgewinde (3) ein Zwischengewinde (4), das zum Einschrauben in das festzulegende Bauteil bestimmt ist. Dadurch kann das Fließen des festzulegenden Bauteils nicht zu einer Lockerung der Schraubverbindung führen.

## Beschreibung

Die Erfindung betrifft eine Schraube zum Festlegen eines aus einem ersten Material bestehen ersten Bauteils an einem zweiten Bauteil.

Zum Festlegen eines ersten Bauteils an einem zweiten Bauteil wird üblicherweise eine Schraube verwendet, die eine glatte Bohrung des ersten Bauteils durchsetzt und in eine Gewindebohrung des zweiten Bauteils eingreift. Dabei kann das Gewinde in dem zweiten Bauteil auch durch eine selbstschneidende oder selbstfurchende Schraube beim Einschrauben mit hergestellt werden.

Bei dieser Art Befestigung wird das erste Bauteil zwischen dem Kopf der Schraube und dem zweiten Bauteil eingeklemmt. Es ist dabei auch bekannt, unter den Kopf der Schraube eine Unterlegscheibe zu legen oder auch das erste Bauteil zwischen zwei Bauteile einzuklemmen.

Wenn das erste festzulegende Bauteil aus einem Material besteht, das zum Fließen neigt, besteht die Gefahr, daß sich die Verklemmung mit der Zeit lockert, so daß die Schraube nicht mehr fest sitzt. Es tritt also ein Vorspannkraftverlust auf.

Der Erfindung liegt die Aufgabe zugrunde, eine Möglichkeit der Befestigung eines Bauteils an einem anderen zu schaffen, die auch dann anwendbar ist, wenn das zu befestigende Bauteil zum Fließen neigt, und die auch nach langer Zeit fest bleibt.

Zur Lösung dieser Aufgabe schlägt die Erfindung eine Schraube mit den im Anspruch 1 genannten Merkmalen sowie eine Verwendung einer Schraube mit den im Anspruch 7 genannten Merkmalen vor. Weiterbildungen der Erfindung sind Gegenstand von Unteransprüchen.

Durch das Vorhandensein des Zwischengewindes wird auch das festzulegende Bauteil in gewisser Weise an dem Schraubenschaft festgelegt, so daß sich ein Fließen des Bauteils nicht im Sinne eines Lockerwerdens auswirkt.

Insbesondere kann dabei vorgesehen sein, daß das Zwischengewinde ein selbstfurchendes Gewinde ist.

Die Verwendung eines selbstfurchenden Gewindes hat gerade bei einem Kunststoffmaterial den Vorteil, daß sich die Befestigung sehr einfach gestaltet.

Erfindungsgemäß kann in Weiterbildung ebenfalls vorgesehen sein, daß das Endgewinde ein selbstfurchendes oder auch ein selbstschneidendes Gewinde ist.

Erfindungsgemäß kann vorgesehen sein, daß die Steigung des Zwischengewindes kleiner ist als die Steigung des Endgewindes oder auch gleich groß. Dies hängt von den Umständen des Einzelfalls und den Abmessungen ab.

In Weiterbildung der Erfindung kann vorgesehen sein, daß der Durchmesser des Zwischengewindes größer ist als der des Endgewindes. Damit wird erreicht, daß beim Durchstecken der Schraube das Endgewinde noch keine Schneidvorgänge an der Bohrung des zu befestigenden Bauteils durchführt.

In nochmaliger Weiterbildung der Erfindung kann vorgesehen sein, daß das Zwischengewinde sowohl von dem Schraubenkopf als auch von dem Endgewinde einen axialen Abstand aufweist.

Bei der Verwendung der Schraube zur Befestigung eines aus einem ersten Material bestehenden ersten Bauteils an einem zweiten Bauteil kann insbesondere vorgesehen sein, daß das festzulegende Bauteil zwischen zwei anderen Bauteilen eingespannt wird. Hier kann vorgesehen sein, daß das Zwischengewinde in das einzuspannende Bauteil eingreift, insbesondere in ein selbst gefurchtes Gewinde einer Bohrung dieses Bauteils.

Erfindungsgemäß kann ebenfalls vorgesehen sein, ein aus zwei Lagen bestehendes Bauteil festzulegen, wobei dann insbesondere das Zwischengewinde der Schraube in die dem zweiten Bauteil zugeordnete Lage des Zwischenbauteils eingreift und dort ein Gewinde furcht.

Die Erfindung schlägt ebenfalls ein Verfahren mit den im Anspruch 11 genannten Merkmalen vor.

Weitere Merkmale, Einzelheiten und Vorzüge der Erfindung ergeben sich aus den Patentansprüchen, deren Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Fig. 1: eine schematische Seitenansicht einer Schraube nach der Erfindung;
- Fig. 2: einen schematischen Schnitt durch mehrere Elemente, die mit einer Schraube nach Fig. 1 aneinander befestigt werden sollen, in einem geänderten Maßstab.

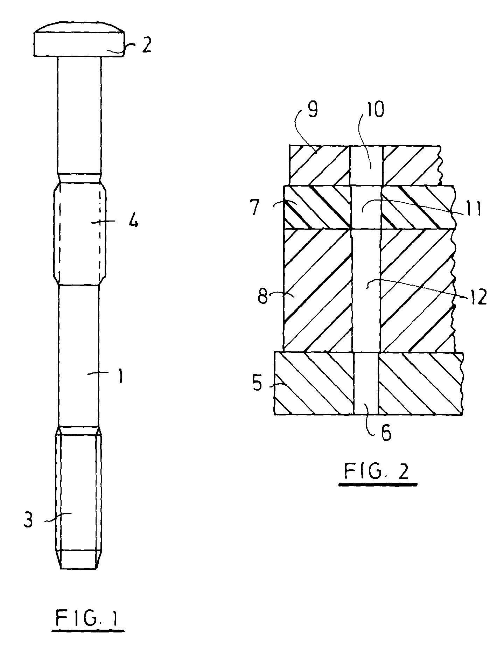

Die in Figur 1 dargestellt Schraube enthält einen Schraubenschaft 1, an dessen einem Ende, in Figur 1 oben, ein Schraubenkopf 2 ausgebildet ist. Der Schraubenkopf 2 enthält eine in Fig. 1 nicht sichtbare Antriebseinrichtung, vorzugsweise eine Vertiefung. An dem dem Schraubenkopf 2 entgegengesetzten freien Ende des Schraubenschafts 1 ist ein Endgewinde 3 ausgebildet, beispielsweise durch einen Walzvorgang. Bei dem Endgewinde 3 kann es sich insbesondere um ein selbstfurchendes oder ein selbstschneidendes oder auch ein metrisches Gewinde handeln.

Etwa in der Mitte der Längserstreckung des Schraubenschafts 1 ist ein Zwischengewinde 4 ausgebildet, vorzugsweise ebenfalls durch einen Walzvorgang. Auch bei dem Zwischengewinde 4 handelt es sich mit Vorteil um ein selbstfurchendes Gewinde.

Nun zu Fig. 2. Unten in Figur 2 ist ein Bauteil 5 zu sehen, das beispielsweise aus Aluminium besteht. Das Bauteil 5 enthält eine glatte Bohrung 6 mit einem bestimmten Durchmesser. An dem Bauteil 5 ist mit Hilfe einer Schraube, wie in Figur 1 dargestellt ist, ein aus einer ersten Lage 7 und einer zweiten Lage 8 zusammengesetztes Bauteil festzulegen. Die Festlegung soll so geschehen, daß das zweilagige erste Bauteil mit Hilfe einer Platte 9 beaufschlagt wird. Die Platte 9 weist eine glatte Durchstecköffnung 10 auf. Die erste Lage 7 weist ebenfalls ein glattes Loch 11 auf. Die zweite Lage 8, die dem zweiten Bauteil 5 zugeordnet ist, weist eine glatte Bohrung 12 mit einem gegenüber den Bohrungen 10 und 11 etwas verkleinerten Durchmesser auf. Der Durchmesser der Bohrung 12 ist immer noch größer als der Durchmesser der Bohrung 6.

Von oben in Fig. 2 wird eine Schraube, wie sie in Fig. 1 in vergrößertem Maßstab dargestellt ist, in das Loch 10 der Platte 9 eingesteckt. Das Endgewinde 3 geht dabei sowohl durch die Bohrungen 10 als auch 11 und 12 hindurch, ohne an den Wänden dieser Bohrungen einen Vorgang durchzuführen. Sobald das Endgewinde 3 den Beginn der Bohrung 6 erreicht, wird mit dem Schrauben begonnen. Dabei furcht das Endgewinde 3 ein Gewinde in der Bohrung 6 und das Zwischengewinde 4 ein Gewinde in der glatten Bohrung 12. Der Schraubvorgang wird soweit fortgesetzt, bis die Unterseite des Schraubenkopfs 2 fest an der Oberseite der Platte 9 anliegt. Jetzt ist eine Festlegung erfolgt. Da das Zwischengewinde 4 in das selbst gefurchte Gewinde der zweiten Lage 8 des zu befestigen Bauteils eingreift, erfolgt also nicht nur eine Klemmung der Lagen 7 und 8 zwischen den beiden metallischen Platten, sondern auch eine Festlegung der Lage 8, die ein Fließen des Materials dieser Lage im Sinne einer Lockerung der Schraubverbindung verhindert.

## Patentansprüche

1. Schraube zum Festlegen eines aus einem ersten Material, insbesondere einem duktilen Werkstoff, z. B. Kunststoff, bestehenden Bauteils an einem insbesondere aus einem anderen Material bestehenden zweiten Bauteil, mit
1.1 einem Schraubenkopf (2) mit einer Antriebsausbildung,
1.2 einem Schraubenschaft (1),
1.2.1 an dessen einem Ende der Schraubenkopf (2) ausgebildet ist,
1.3 einem an dem freien zum Eingriff in das zweite Bauteil (5) bestimmten Ende des Schraubenschafts (1) ausgebildeten Endgewinde (3), sowie mit
1.4 einem Zwischengewinde (4), das
1.4.1 in einem zum Eingriff in das erste Bauteil (8) bestimmten Bereich des Schraubenschafts (1) ausgebildet ist.

2. Schraube nach Anspruch 1, bei der das Zwischengewinde (4) ein selbstfurchendes Gewinde ist.

3. Schraube nach Anspruch 1 oder 2, bei der das Endgewinde (3) ein selbstfurchendes oder selbstschneidendes Gewinde ist.

4. Schraube nach einem der vorhergehenden Ansprüche, bei der die Steigung des Zwischengewindes (4) kleiner als die oder gleich der Steigung des Endgewindes (3) ist.

5. Schraube nach einem der vorhergehenden Ansprüche, bei der der Durchmesser des Zwischengewindes (4) größer ist als der des Endgewindes (3).

6. Schraube nach einem der vorhergehenden Ansprüche, bei der das Zwischengewinde (4) von dem Schraubenkopf (2) und dem Endgewinde (3) einen axialen Abstand aufweist.

7. Verwendung einer Schraube mit Merkmalen eines oder mehrerer der vorhergehenden Ansprüche zum Festlegen eines aus einem ersten Material, insbesondere einem duktilen Werkstoff, z. B. Kunststoff, bestehenden Bauteils (8) an einem insbesondere aus einem anderen Material bestehenden zweiten Bauteil (5).

8. Verwendung nach Anspruch 7 zum Einspannen eines Bauteils (7, 8) zwischen zwei anderen Bauteilen (9, 5), wobei das Zwischengewinde (4) in das einzuspannende Bauteil (8) eingreift.

9. Verwendung nach Anspruch 7 oder 8, bei der das festzulegende bzw. einzuspannende Bauteil aus zwei Lagen (7, 8) aufgebaut ist.

10. Verwendung nach Anspruch 9, bei dem das Zwischengewinde (4) der Schraube in die dem zweiten Bauteil (5) zugeordnete Lage (8) des Zwischenbauteils ein Gewinde furcht.

11. Verfahren zum Festlegen eines aus einem ersten Material, insbesondere einem duktilen Werkstoff, z. B. Kunststoff, bestehenden ersten Bauteils (8) an einem insbesondere aus einem anderen Material bestehenden zweiten Bauteil (5), bei dem
11.1 das erste Bauteil (8) mit einer Bohrung (12) eines ersten Durchmessers versehenen wird,
11.2 das zweite Bauteil (5) mit einer Bohrung (6) kleineren Durchmessers versehen wird,
11.3 die Bauteile (8, 5) mit fluchtenden Bohrungen (12, 6) übereinander gelegt werden und
11.4 eine Schraube eingeschraubt wird, mit der
11.4.1 beim Einschrauben in mindestens der Bohrung (12) des ersten Bauteils (8) ein Gewinde gefurcht wird.
